# EUROPEAN PATENT APPLICATION

(11) **EP 2 977 615 A1**
(43) Date of publication of application: **27.01.2016**
(21) Application number: 15175024.7
(22) Date of filing: 02.07.2015
(51) Int. Cl.: F04D 13/06, F04D 29/02, F04D 29/58, F16C 17/02, F04D 29/046

(54) **ELECTRIC PUMP**

(30) Priority: 24.07.2014 JP 2014150968; 24.07.2014 JP 2014150969
(71) Applicant: AISIN SEIKI KABUSHIKI KAISHA, Kariya-shi, Aichi 448-8650 (JP)
(72) Inventor: HATTORI, Shuji, Kariya-shi, Aichi 448-8650 (JP); KAMIYA, Naoki, Kariya-shi, Aichi 448-8650 (JP); OGAWA, Hiroomi, Kariya-shi, Aichi 448-8650 (JP)
(74) Representative: Kramer Barske Schmidtchen Patentanwälte PartG mbB

(57) **Abstract**

An electric pump (P) includes: a case (1); a shaft member (3) fixed to the case; a cylindrical bearing (4) inserted on the outside of the shaft member; a rotor (5) configured as a member separate from the bearing, and configured to rotate integrally with the bearing; and an impeller (6) fixed to one end of the rotor, wherein a discharge path (52) is formed between the bearing and the rotor along an axial direction, and allows fluid to return to the impeller therethrough, the fluid flowing from the outer circumference of the impeller into the case, and circulating in the case.

## Description

### TECHNICAL FIELD

This disclosure relates to an electric pump including a rotor rotatably supported by a shaft member, and an impeller fixed to one end of the rotor.

### BACKGROUND DISCUSSION

In the related art, an electric pump, which includes a shaft member fixed to a case, and a rotor inserted on the outside of the shaft member, is known (for example, refer to JP 2006-296125A (Reference 1)). A through path is formed to pass through a region between the shaft member and the rotor along an axial direction. A balancing hole for releasing fluid pressure in the case to the impeller is formed radially outside of the through path so as to pass through an end of the rotor and to communicate with blade members of the impeller.

A portion of a fluid flowing due to the rotation of the impeller cools electronic components and the like while circulating in the case, and returns to the impeller via the through path or the balancing hole. At this time, the fluid passing through the through path works as a lubricant that lubricates the shaft member and the rotor.

However, in the electric pump in the related art, the through path is formed between the shaft member and the rotor, and thus the size of the through path is limited to small dimensions such that the rotor does not shake relative to the shaft member. For this reason, foreign matter mixed into the fluid may block the through path, and bite between the shaft member and the rotor. Therefore, the rotation of the rotor is prevented, which is a problem.

Since the balancing hole communicates with the blade members of the impeller, a significant fluid pressure, resulting from the rotation of the impeller, is exerted onto the fluid, and the fluid flows backward into the case. As a result, there is a problem in that the foreign matter mixed into the fluid is not discharged, and remains in the case.

### SUMMARY

Thus, a need exists for an electric pump that can smoothly discharge foreign matter mixed into a fluid without preventing the rotation of a rotor.

An aspect of this disclosure is directed to an electric pump including: a case; a shaft member fixed to the case; a cylindrical bearing inserted on the outside of the shaft member; a rotor configured as a member separate from the bearing, and configured to rotate integrally with the bearing; and an impeller fixed to one end of the rotor, in which a discharge path is formed between the bearing and the rotor along an axial direction, and allows fluid to return to the impeller therethrough, the fluid flowing from the outer circumference of the impeller into the case, and circulating in the case.

According to this configuration, the bearing and the rotor rotate integrally around the fixed shaft member, the rotor being configured as a member separate from the bearing. That is, since it is not necessary to provide a through path for the sake of lubrication between the shaft member and the rotor unlike the related art, it is sufficient to make only the bearing of a highly wear-resistant material, which is beneficial. In addition, foreign matter biting between the shaft member and the bearing does not prevent the rotation of the rotor.

According to this configuration, the discharge path is provided between the bearing and the rotor which rotate integrally, and the shaking of components relative to the shaft member occurs less than in the related art in which the discharge path is provided between the shaft member and the rotor which do not rotate integrally. Therefore, it is possible to ensure a large sectional area of the discharge path. That is, even if large pieces of foreign matter are mixed into the fluid, the discharge path is not blocked. Accordingly, foreign matter mixed into the fluid returns to the impeller and is discharged to the outside without remaining in the case.

As described above, it is possible to reasonably configure an electric pump that can smoothly discharge foreign matter mixed into the fluid without preventing the rotation of the rotor.

In the electric pump according to the aspect of this disclosure, an outlet of the discharge path may be provided closer to the center of the shaft member than to the blade members of the impeller.

Centrifugal force, resulting from the rotation of the impeller, is exerted onto the fluid, and the fluid flows to the outer circumference of the impeller. That is, the flow rate (fluid pressure) of the fluid increases toward the outer circumference of the impeller in a region in which the blade members of the impeller are present. In this configuration, the outlet of the discharge path is provided closer to the center of the shaft member than to the blade members of the impeller, that is, it is provided on the inner circumference of the impeller on which fluid pressure is exerted the least, and thus it is possible to make the fluid, into which foreign matter is mixed, smoothly flow from the inside of the case to the impeller.

In the electric pump according to the aspect of this disclosure, the rotor may be made of a resin material into which the bearing is insert-molded, and a portion of the discharge path may pass through an inside portion of the rotor while not being in contact with the external surface of the bearing along the axial direction.

According to this configuration, when the rotor is formed with the bearing being insert-molded, integrity between the rotor and the bearing is increased. Since the discharge path is configured such that a portion of the discharge path is not in contact with the external surface of the bearing along the axial direction, the entire circumference of the bearing is surrounded by the resin material used to form the rotor. Accordingly, pressure, induced by resin shrinkage, exerted on the bearing is distributed along a circumferential direction of the bearing, the shape of the internal sectional surface of the bearing is easily maintained in a circular shape. As a result, the bearing and the rotor can smoothly rotate relative to the shaft member.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a sectional view illustrating the entire configuration of an electric pump in an embodiment;
Fig. 2 is a partial sectional view in the embodiment;
Fig. 3 is a view when the part in Fig. 2 is seen from the front;
Fig. 4 is a side view of the embodiment;
Fig. 5 is a plan view of the embodiment;
Fig. 6 is a view when the part in Fig. 2 is seen from the rear;
Fig. 7 is a side view of a bearing;
Fig. 8 is a sectional view taken along line VIII-VIII in Fig. 2;
Fig. 9 is a view of one end of a rotor when seen from the front;
Fig. 10 is a partial sectional view of another embodiment; and
Fig. 11 is a view when the part in Fig. 10 is seen from the rear.

### DETAILED DESCRIPTION

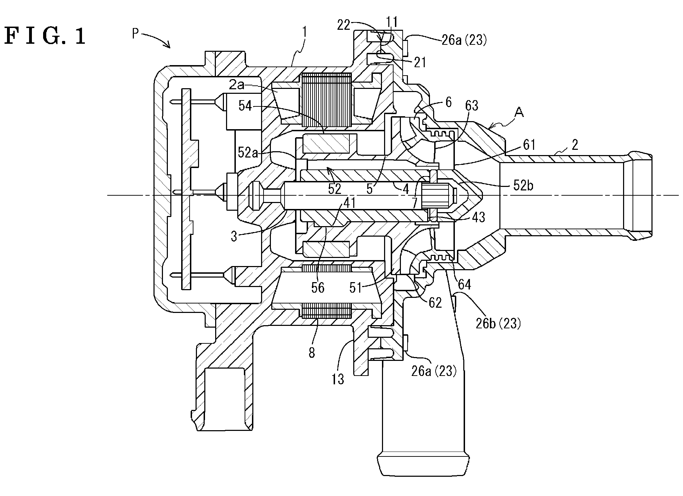

Hereinafter, an electric pump P in an embodiment disclosed here will be described with reference to the accompanying drawings. In an example given in the embodiment, an electric water pump (hereinafter, simply referred to as an "electric pump P") for circulating coolant (an example of a fluid), which cools the engine of a vehicle, will be described. However, this disclosure is not limited to the embodiment to be described hereinbelow, and can be modified in various forms insofar as the modifications do not depart from the purport of this disclosure. In an explanation to be given hereinbelow, the front and the rear in a longitudinal direction of a rotor 5 in Fig. 1, respectively, refer to a side on which an impeller 6 is disposed, and the opposite side to the impeller 6.

Fig. 1 illustrates the entire configuration of the electric pump P in the embodiment. The electric pump P includes a case 1 made of resin; a metal shaft (shaft member) 3 fixed to the case 1; a cylindrical bush (bearing) 4 inserted on the outside of the shaft 3; the rotor 5 configured as a member separate from the bush 4, and rotating integrally with the bush 4; and the impeller 6 fixed to a flange-shaped end 51 of the rotor 5.

The bush 4, which directly slides against the shaft 3, is made of a highly wear-resistant and high heat-resistant material, and for example, is configured as a carbon bearing made of a composite material consisting of carbon fiber and resin, or only carbon. The rotor 5 is made of a resin material such as polyphenylene sulfide (PPS), in which the bush 4 is insert-molded. The material of the bush 4 is not limited to a specific material insofar as the material yields a high wear resistance and a high heat resistance, and the bush 4 may be made of resin or metal such as aluminum.

An engine control unit (ECU) (not illustrated) of the vehicle performs control of the flow of current to a coil wound around a stator 8, and as a result, a magnet 54 of the rotor 5 is affected by alternating magnetic fields, and the bush 4 and the rotor 5 rotate integrally.

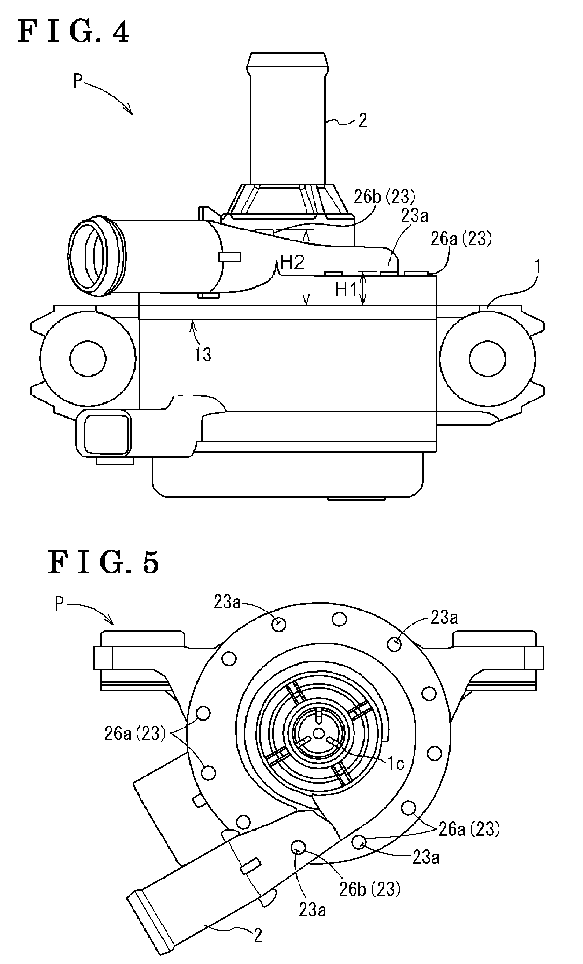

When the bush 4 and the rotor 5 rotate integrally, the impeller 6 fixed to the end 51 of the rotor 5 rotates as well. As illustrated in Figs. 1 to 5, the impeller 6 has a plurality of curved blade members 63 inside of a shroud 64, and is covered with an impeller cover 2 made of resin. For example, the blade members 63 are attached to the end 51 of the rotor 5 using vibration welding. The electric pump P has the case 1; the impeller cover 2; a welding portion 22 in which a first press contact surface 11 formed in the case 1 and a second press contact surface 21 formed in the impeller cover 2 are welded together while being in press contact therewith; a first pressing portion 13 of the first press contact surface 11, and a second pressing portion 23 of the second press contact surface 21 onto each of which a pressing force is exerted so as to bring the first press contact surface 11 into press contact with the second press contact surface 21. The second pressing portion 23 has a convex portion 26a with a pressing surface 23a having a height H1 set from the second press contact surface 21, and a convex portion 26b with a pressing surface 23a having a height H2 set from the second press contact surface 21.

As illustrated in Fig. 1, a washer 7 is disposed between the impeller cover 2 and the bush 4 along an axial direction L, and is fitted over the external surface of a leading end portion of the shaft 3 such that the shaft 3 and the bush 4 cannot rotate relative to each other. The washer 7 works as a retainer for the bush 4.

When the bush 4 and the rotor 5 rotate integrally, and the impeller 6 rotates, the coolant flows in a spiral manner from a suction port 61 to the outer circumference of the impeller 6. At this time, as illustrated in Fig. 1, the majority of the coolant is delivered to the outside via a discharge port 62, and a portion of the coolant flows from the outer circumference of the impeller 6 into the case 1, and circulates therein. When the portion of the coolant circulates in the case 1, the rotor 5, the stator 8, or the like are cooled.

In contrast, foreign matter, for example, rust, metal powder, or the like from metal components, may be mixed into the coolant in a circulation path, clog up a narrow path formed in the case 1, and remain therein. In particular, since it is necessary to design the shaft 3 to have a vicinity which does not deteriorate the support function of the shaft 3 which is performed for the rotor 5, it is not possible to ensure a large flow path for the coolant. As a result, there is a problem in that the coolant cannot return from the inside of the case 1 to the impeller 6, a rotation failure may occur due to foreign matter biting into a component, or cooling function may deteriorate.

In the embodiment, a discharge path 52 is formed between the bush 4 and the rotor 5 along the axial direction L, and allows the coolant to return to the impeller 6 therethrough, the coolant flowing from the outer circumference of the impeller 6 into the case 1, and circulating in the case 1. In particular, in the embodiment, the discharge path 52 is formed in the rotor 5 while being in contact with the external surface of the bush 4. Accordingly, it is possible to form the discharge path 52 by inserting a core pin into a molding die when the bush 4 is insert-molded, and thus it is not necessary to machine the bush 4, and it is possible to obtain good manufacturing efficiency. Since the discharge path 52 is formed between the bush 4 and the rotor 5, it is possible to obtain a high degree of freedom in determining the dimensions and shape of the discharge path 52. Therefore, it is possible to solve the problem that foreign matter mixed into the coolant clogs up a path.

In the embodiment, an outlet 52b of the discharge path 52 is provided closer to the center of the shaft 3 than to the blade members 63 of the impeller 6. The outlet 52b also works as a so-called balancing hole for releasing fluid pressure in the case 1 to the impeller 6.

Typically, the balancing hole passes through the end 51 of the rotor 5, and communicates with a region in which the blade members 63 are present. For this reason, there is a problem in that the coolant may receive fluid pressure resulting from the rotation of the impeller 6, and flow backward into the case 1. As a result, the fluid pressure in the case 1 is not released, and the rotating function of the rotor 5 deteriorates. In addition, there is a problem in that the coolant cannot circulate from the inside of the case 1 to the impeller 6 and cooling function deteriorates. However, in the embodiment, the balancing hole is provided inside of the blade members 63 such that the coolant is less affected by fluid pressure resulting from the rotation of the impeller 6, and thus the coolant can smoothly flow from the inside of the case 1 to the impeller 6.

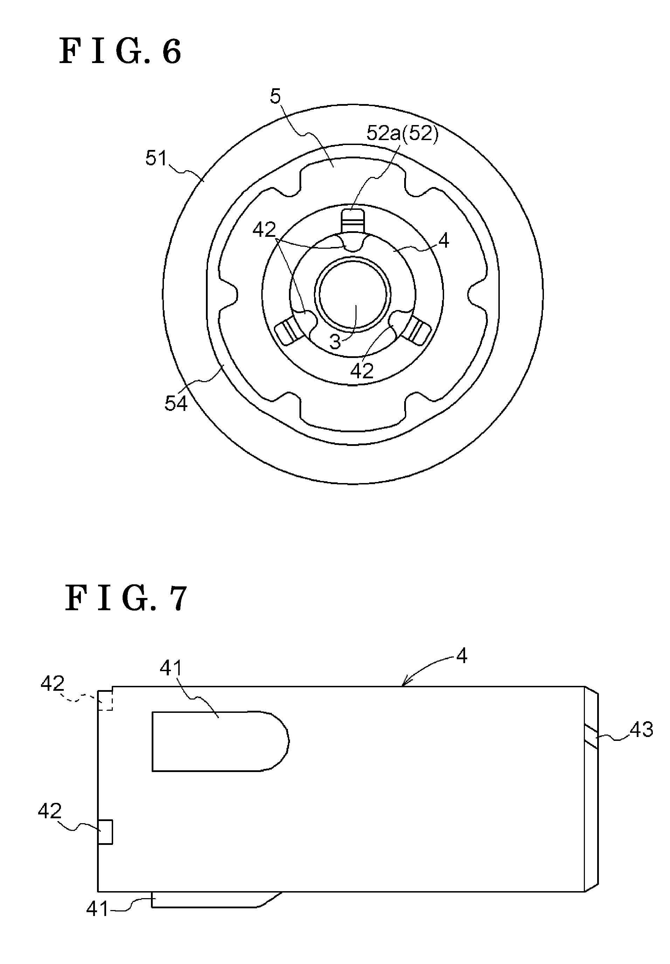

As illustrated in Fig. 7, the bush 4 is formed in a cylindrical shape, and a plurality (in the embodiment, three) of protruding portions 41, surrounded by the insert-molding resin material used to form the rotor 5, are provided on the external circumferential surface of the bush 4 while being positioned at equal intervals along a circumferential direction of the bush 4. Since the protruding portions 41 are in close contact with internal-surface concave portions 56 of the rotor 5, respectively, relative rotation between the bush 4 and the rotor 5 is restricted, and both the bush 4 and the rotor 5 rotate integrally.

As illustrated in Figs. 6 and 7, the rear end surface of the bush 4 opposite to the impeller 6 is cut away in a radial direction of the bush 4 such that a plurality of positioning concave portions 42 are formed in the rear end surface. When the bush 4 is seen from the rear, the positioning concave portions 42 are disposed at equal intervals along the circumferential direction of the bush 4 while being interposed between the three protruding portions 41. That is, the protruding portions 41 and the positioning concave portions 42 are alternately disposed along the circumferential direction of the bush 4.

When the rotor 5 is formed with the bush 4 being insert-molded, core pins are inserted into the molding die so as to align with the positions of the positioning concave portions 42 along the longitudinal direction. That is, the positioning concave portions 42 work as guides in positioning the discharge paths 52 formed between the bush 4 and the rotor 5. Since the positioning concave portions 42 are in contact with an insert-molding die, it is possible to fix the position of the bush 4.

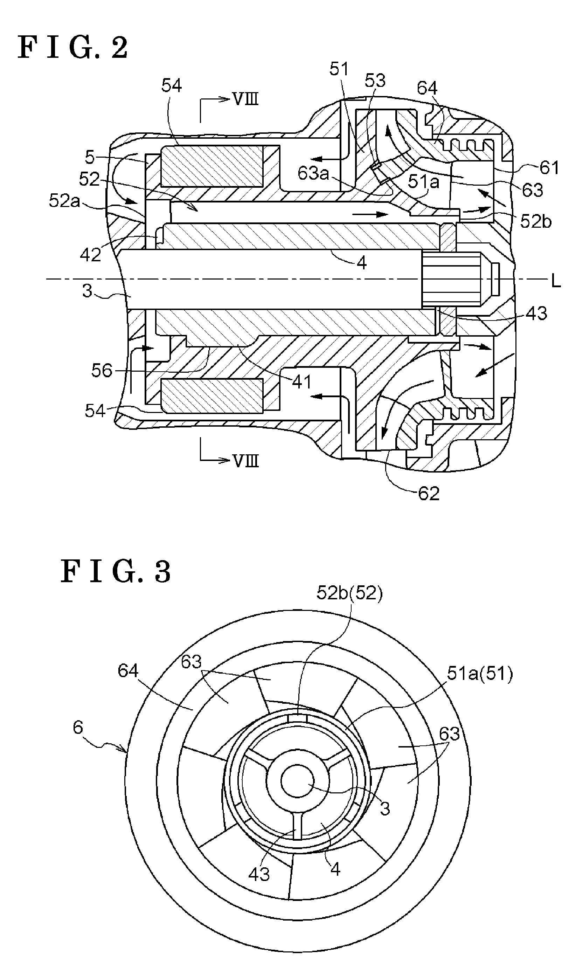

As illustrated in Fig. 3, a plurality of leading end grooves 43 are formed in the leading end surface of the bush 4 adjacent to the impeller 6, and extend in a radiating shape around the center of the bush 4. The leading end grooves 43 work as paths through which carbon power, made by sliding friction between the shaft 3 and the bush 4, is guided to the outside in the radial direction. The leading end grooves 43 communicate with the outlets 52b of the discharge paths 52, and as illustrated in Fig. 7, when the bush 4 is seen from the front, the leading end grooves 43 are disposed at the same circumferential positions as those of the three protruding portions 41.

The quantities, dimensions, and shapes of the protruding portions 41, the positioning concave portions 42, and the leading end grooves 43 are not limited to specific quantities, dimensions and shapes, and one or more protruding portions 41, one or more positioning concave portions 42, and one or more leading end grooves 43 may be provided along the circumferential direction of the bush 4. When the bush 4 is seen from the rear, the protruding portions 41 and the positioning concave portions 42 are disposed so as to not overlap each other.

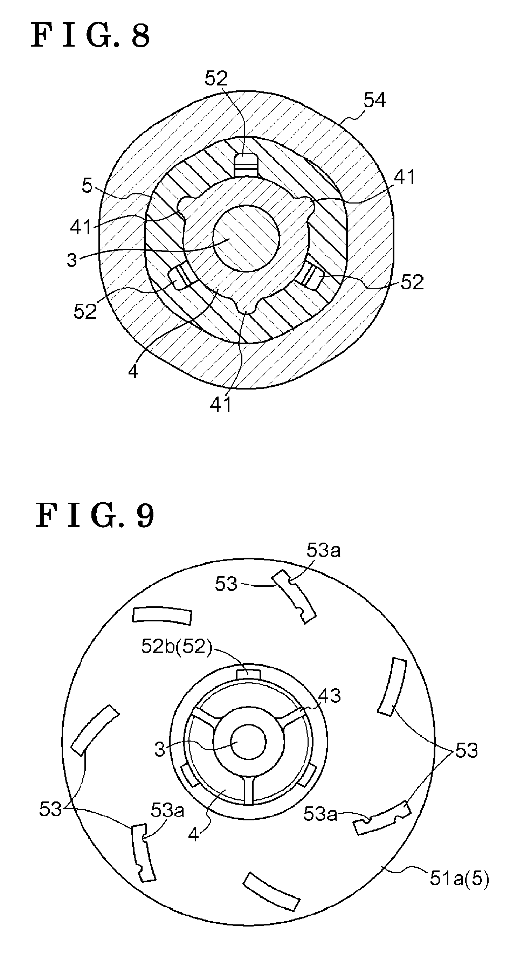

As illustrated in Figs. 1 to 2, the magnet 54 is insert-molded into the rotor 5 while being positioned on the opposite side to the end 51. As illustrated in Fig. 8, the magnet 54 is configured as a multipolar magnet (6-pole magnet), and the internal sectional surface of the magnet 54 is formed in a hexagonal annular shape. The number of poles of the magnet 54 is not limited to six poles, and may be an even number greater than two.

The protruding portions 41 of the bush 4 and the discharge paths 52 are alternately disposed at the apexes of the hexagonal internal surface of the magnet 54. That is, since the protruding portion 41 is disposed in a region in which a large thickness of the resin material used to form the rotor 5 is ensured, it is possible to increase the amount of protrusion of the protruding portion 41. For this reason, it is possible to appropriately set the dimensions and shape of the protruding portion 41 while taking the rigidity of each of the bush 4 and the rotor 5 into consideration. In addition, since the discharge path 52 is disposed in a region in which a large thickness of the resin material used to form the rotor 5 is ensured, it is possible to ensure a large sectional area of the discharge path 52. Accordingly, even if large pieces of foreign matter are mixed into the coolant, the discharge path 52 is unlikely to be blocked. The foreign matter mixed into the coolant is smoothly discharged to the impeller 6 without remaining in the case 1.

As illustrated in Fig. 9, rectangular insertion concave portions 53 are formed in one end surface 51a of the rotor 5 with the number (in the embodiment, seven) of rectangular insertion concave portions 53 set to the same as the number of blade members 63, and rear end portions 63a of the blade members 63 are inserted into the insertion concave portions 53. Convex portions 53a are respectively formed in both side surfaces of some of the plurality of the insertion concave portions 53, and are positioned separate from each other in a longitudinal direction of the insertion concave portion 53. For this reason, the displacement of the blade member 63 relative to the axis of the rotor 5 is prevented when the blade member 63 is attached to the one end surface 51 a of the rotor 5 using vibration welding. In addition, since the blade member 63 comes into contact with the convex portion 53a when the impeller 6 rotates, the blade member 63 is prevented from moving relative to the one end surface 51 a of the rotor 5 in a rotation direction.

The convex portions 53a may be limitedly provided in some of the insertion concave portions 53, or the convex portions 53a may be provided in all the insertion concave portions 53. When the insertion concave portion 53 is formed in substantially the same size as that of the rear end of the blade member 63, the convex portion 53a may not be provided.

### Another Embodiment

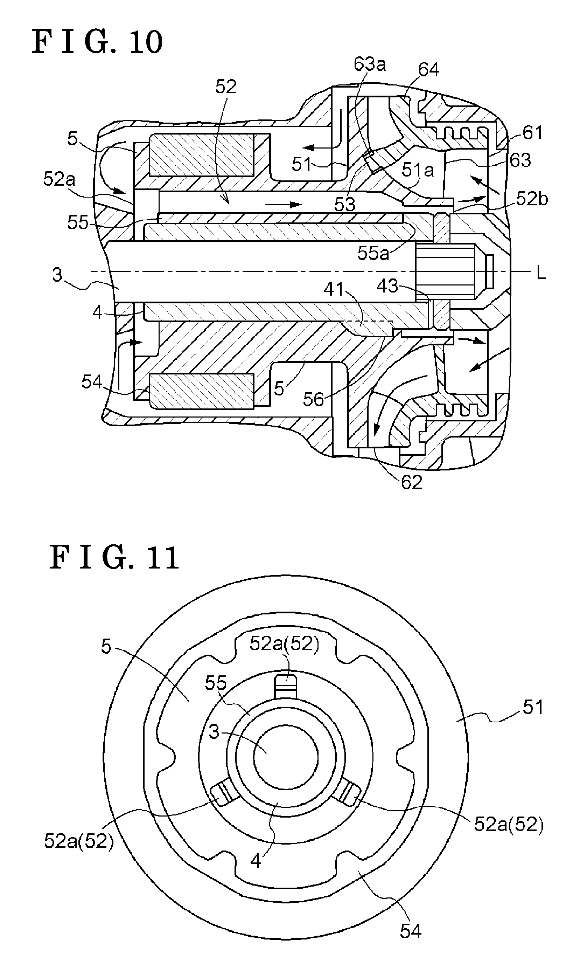

Only points of difference in configuration between another embodiment and the aforementioned embodiment will be described with reference to Figs. 10 to 11. In order to help easy understanding of the drawings, the same names and reference signs of members as those in the aforementioned embodiment are used in the explanation to be given herein.

In this embodiment, a portion of the discharge path 52 passes through an inside portion of the rotor 5 while not being in contact with the entire circumference of the bush 4 along the axial direction L. In other words, a resin surrounding portion 55 is formed in such a manner that the resin material used to form the rotor 5 surrounds the entire circumference of a partial region on the external surface of the bush 4 along the axial direction L. In this embodiment, the partial region refers to a region of the discharge path 52 not including the vicinity of an inlet 52a and the outlet 52b, and the discharge path 52 is in contact with the entire outer circumference of the bush 4 in the vicinity of the inlet 52a and the outlet 52b.

Accordingly, since resin contracting pressure exerted on the bush 4 is distributed along the circumferential direction of the bush 4 when the insert-molding die is removed, the shape of the internal sectional surface of the bush 4 is maintained in a circular shape. For this reason, the bush 4 smoothly rotates relative to the shaft 3.

When the discharge path 52 is configured such that the discharge path 52 is in contact with the entire outer circumference of the bush 4 in the vicinity of the outlet 52b, it is possible to dispose the impeller 6 inward in the radial direction, and thus as the electric pump P, a compact-sized pump can be used. Since it is possible to ensure a large sectional area of the discharge path 52, it is possible to smoothly discharge the coolant to the impeller 6.

In this embodiment, the resin surrounding portion 55 is formed by providing a stepped portion 55a in the leading end portion of the bush 4 along the circumferential direction, the stepped portion 55a being formed by recessing the external surface of the leading end portion in the radial direction. However, this is just an example, and the resin surrounding portion 55 may be provided on the external flush surface of the bush 4 instead of recessing the external surface of the bush 4. Also in this case, it is possible to ensure a large sectional area of the discharge path 52 compared to when the discharge paths 52 are provided between the shaft 3 and the bush 4.

### Other Embodiments

(1) In the aforementioned embodiment, the discharge paths 52 are formed in the rotor 5 side while being positioned between the bush 4 and the rotor 5; however, the discharge paths 52 may be formed in the bush 4 side while being positioned between the bush 4 and the rotor 5. The discharge paths 52 may be formed in the bush 4 and the rotor 5 astride.
(2) In the aforementioned embodiment, a portion of the discharge path 52 is not in contact with the entire circumference of the bush 4 along the axial direction L; however, the entire discharge path 52 may not be in contact with the entire circumference of the bush 4 along the axial direction L. The portion of the discharge path 52 along the axial direction L is not limited to a region not including the vicinity of the inlet 52a and the outlet 52b, and may be provided in a region not including the vicinity of the inlet 52a or the outlet 52b.
(3) A method for integrating the bush 4 and the rotor 5 together, the bush 4 and the rotor 5 being configured as separate members, is not limited to an insert-molding method, and for example, the rotor 5 may be press-fitted on the bush 4.
(4) A method for fixing the impeller 6 to the end 51 of the rotor 5 is not limited to vibration welding, and for example, the impeller 6 can be fixed to the rotor 5 using various methods such as thermal welding or integration molding.
(5) The electric pump P is not limited to a pump for circulating the coolant of the engine, and the electric pump P may circulate engine oil, or may have applications other than a vehiclular application. With regards to a motor drive method, the electric pump P is not limited to a brushless motor that generates alternating magnetic fields; alternatively, a brushed motor may be used as the electric pump P.

This disclosure can be used in an electric pump for circulating various types of fluid.

The principles, preferred embodiment and mode of operation of the present invention have been described in the foregoing specification. However, the invention which is intended to be protected is not to be construed as limited to the particular embodiments disclosed. Further, the embodiments described herein are to be regarded as illustrative rather than restrictive. Variations and changes may be made by others, and equivalents employed, without departing from the spirit of the present invention. Accordingly, it is expressly intended that all such variations, changes and equivalents which fall within the spirit and scope of the present invention as defined in the claims, be embraced thereby.

## Claims

1. An electric pump (P) comprising:
a case (1);
a shaft member (3) fixed to the case;
a cylindrical bearing (4) inserted on the outside of the shaft member;
a rotor (5) configured as a member separate from the bearing, and configured to rotate integrally with the bearing; and
an impeller (6) fixed to one end of the rotor,
wherein a discharge path (52) is formed between the bearing and the rotor along an axial direction, and allows fluid to return to the impeller therethrough, the fluid flowing from the outer circumference of the impeller into the case, and circulating in the case.

2. The electric pump according to claim 1,
wherein an outlet (52b) of the discharge path is provided closer to the center of the shaft member than blade members of the impeller.

3. The electric pump according to claim 1 or 2,
wherein the rotor is made of a resin material into which the bearing is insert-molded, and wherein a portion of the discharge path passes through an inside portion of the rotor while not being in contact with the external surface of the bearing along the axial direction.
